# EUROPÄISCHE PATENTSCHRIFT

(11) **EP 3 212 569 B1**
(45) Veröffentlichungstag und Bekanntmachung des Hinweises auf die Patenterteilung: **04.04.2018**
(21) Anmeldenummer: 15822902.1
(22) Anmeldetag: 27.10.2015
(51) Int. Cl.: C01B 13/02, B01D 53/22, B01D 53/26

(54) **VERFAHREN UND ANORDNUNG ZUR ERZEUGUNG UND THERMISCHEN KOMPRESSION VON SAUERSTOFF**
METHOD AND ARRANGEMENT FOR THE PRODUCTION AND THERMAL COMPRESSION OF OXYGEN
PROCÉDÉ ET DISPOSITIF DE PRODUCTION ET DE COMPRESSION THERMIQUE D'OXYGÈNE

(30) Priorität: 30.10.2014 DE 102014115849
(43) Veröffentlichungstag der Anmeldung: 06.09.2017
(73) Patentinhaber: Fraunhofer Gesellschaft zur Förderung der angewandten Forschung E.V., 80686 München (DE)
(72) Erfinder: KRIEGEL, Ralf, 07768 Kahla (DE); KIRCHEISEN, Robert, 07749 Jena (DE); SONNENBERG, Claudia, 07607 Eisenberg (DE); SCHULZ, Matthias, 99428 Weimar OT Legefeld (DE)
(74) Vertreter: Oehmke, Volker
(86) Internationale Anmeldenummer: PCT/DE2015/100450
(87) Internationale Veröffentlichungsnummer: WO 2016/066160

(56) Entgegenhaltungen:
- EP-A1- 0 916 384
- US-A1- 2003 056 647
- ADRIAN LEO ET AL: "Production of pure oxygen from BSCF hollow fiber membranes using steam sweep", SEPARATION AND PURIFICATION TECHNOLOGY, ELSEVIER SCIENCE, AMSTERDAM, NL, Bd. 78, Nr. 2, 3. Februar 2011 (2011-02-03), Seiten 220-227, XP028156400, ISSN: 1383-5866, DOI: 10.1016/J.SEPPUR.2011.02.006 [gefunden am 2011-02-11]
- WANG H ET AL: "Production of high-purity oxygen by perovskite hollow fiber membranes swept with steam", JOURNAL OF MEMBRANE SCIENCE, ELSEVIER BV, NL, Bd. 284, Nr. 1-2, November 2006 (2006-11), Seiten 5-8, XP024931689, ISSN: 0376-7388, DOI: 10.1016/J.MEMSCI.2006.07.043 [gefunden am 2006-11-01] in der Anmeldung erwähnt

## Beschreibung

Die Erfindung betrifft ein Verfahren und eine Anordnung zur kontinuierlichen Erzeugung von komprimiertem Sauerstoff aus Luft unter Verwendung gemischt leitender keramischer Membranen.

Die konventionelle Produktion von Sauerstoff erfolgt bevorzugt durch Druckwechseladsorption (PSA - Pressure Swing Adsorption) oder durch kryogene Luftzerlegung (Linde®-Verfahren), wobei beide Prozesse unter Einsatz von Elektroenergie betrieben werden. Meist wird der Sauerstoff für nachfolgende Prozesse mit Überdruck benötigt, um die Druckverluste in den nachgeordneten Prozessen und in den Leitungssystemen überwinden zu können. Zur Nachverdichtung werden normalerweise elektromechanische Kompressoren eingesetzt, die aufgrund ihrer Eignung für die Sauerstoffkompression hohe Investitionskosten verursachen, zusätzlich Elektroenergie verbrauchen und ein erhebliches Sicherheitsrisiko darstellen, wie entsprechende Unfälle belegen.

Eine alternative Methode zur Herstellung von Sauerstoff basiert auf einem Membrantrennprozess bei hohen Temperaturen. Dafür werden gemischt leitende keramische Membranen (MIEC - Mixed Ionic Electronic Conductor) eingesetzt, die eine hochselektive Abtrennung von Sauerstoff ermöglichen. Der Sauerstofftransport beruht auf dem Transport von Oxidionen durch das gasdichte keramische Material und dem parallel stattfindenden Transport elektronischer Ladungsträger (Elektronen oder Defektelektronen).

Die Sauerstoffpermeation durch eine MIEC-Membran kann durch die Wagner'sche Gleichung beschrieben werden und ist vor allem durch die ambipolare Leitfähigkeit des Materials bei Einsatztemperatur, die Membrandicke und die Triebkraft bestimmt. Letztere ergibt sich aus dem logarithmischen Verhältnis des Sauerstoffpartialdrucks im Feedgas (pₕ) zu dem Sauerstoffpartialdruck im Spülgas (pₗ) oder im Permeat. Der Sauerstofffluss durch eine MIEC-Membran ist demnach bei gegebenem Material, konstanter Membrandicke und festgelegter Temperatur proportional zu In(pₕ/pₗ). Dementsprechend hat eine Verdopplung von pₕ auf der Feedgasseite die gleiche Erhöhung des Sauerstoffflusses zur Folge wie eine Halbierung von pₗ auf der Permeat- oder Sweepgasseite. Zur Erzeugung reinen Sauerstoffs in technischen Membrananlagen kann dementsprechend die Luft verdichtet oder der Sauerstoff mit Vakuum abgesaugt werden; natürlich sind auch kombinierte Prozesse möglich (Armstrong, P.A., Bennett, D.L., Foster, E.P., Stein, V.E.: The New Oxygen Supply for the New IGCC Market. Gasification Techn. 2005, San Francisco, 9.-12.10.2005). Für großtechnische Anlagen wird i. A. die Verdichtung der Luft bevorzugt, da Kompressoren i. A. billiger und besser verfügbar sind als Vakuumerzeuger.

Wird der erzeugte Sauerstoff für chemische Reaktionen benötigt, so kann die Triebkraft energetisch am günstigsten durch Spülung der MIEC-Membran mit sauerstoffarmen Gasen erzeugt werden. Um den Sauerstofffluss durch die Membran zu steigern und Sauerstoff mit ausreichend hohem Druck für nachgeordnete Prozesse zur Verfügung zu stellen, wird typischerweise auf der Feedgasseite die Luft mit mechanischen Kompressoren verdichtet und nach dem Membranmodul die Kompressionsenergie aus der sauerstoffabgereicherten Luft durch eine Entspannungsturbine zu einem Großteil zurückgewonnen.

Die Verwendung von Dampf als Sweepgas an MIEC-Membrananlagen ist prinzipiell bekannt, dabei wird jedoch ebenfalls typischerweise die Luft vorher verdichtet (US 2003/0056647 A1, US 5,582,754 A, EP 0 916 385 A1). Einfache Laboraufbauten nutzen Mischungen aus Dampf und Inertgas, wobei Letzteres zur Realisierung eines definierten Gasdurchsatzes eingesetzt wird (Wang, H., Kölsch, P., Schiestel, T., Tablet, C., Werth, S., Caro, J.: Production of high-purity oxygen by perovskite hollow fiber membranes swept with steam. J. of Membr. Sc. 284 (2006), S. 5).

Entsprechend den theoretischen Grundlagen ist für den geschilderten Prozess zu erwarten, dass der Durchtritt des Sauerstoffs durch die Membran in den Wasserdampf nur bis zu einem Sauerstoffgehalt führt, der dem der zugeführten Luft auf der Feedseite entspricht. Sind die Sauerstoffpartialdrücke auf beiden Seiten der Membran gleich, so resultiert ein Verhältnis der Sauerstoffpartialdrücke von 1, die Triebkraft In(pₕ/pₗ) für den Transportprozess wird gleich 0. Der Prozess wird demnach zum Stillstand kommen, da sich ein Konzentrationsgleichgewicht einstellt. In den beschriebenen Anordnungen wird dies bislang dadurch verhindert, dass ein Inertgas eine kontinuierliche Gasströmung realisiert. Somit kann jedoch kein reiner Sauerstoff gewonnen werden, da dieser stets weitere Gase enthält.

Die Möglichkeit zur Erzeugung von reinem Sauerstoff mit Wasserdampf als Spülgas scheint naheliegend, wenn eine ausreichende Gasströmung mit Wasserdampf allein realisiert wird, also ohne Zugabe weiterer Gase. Allerdings wird in einem solchen halboffenen System, bei dem gasseitig ein Druckausgleich mit der Umgebung besteht und ein Gasaustausch mit dieser möglich ist, stets Umgebungsdruck herrschen. Der Aufbau eines Überdrucks ist nicht zu erwarten, da dieser Überdruck auch zu einem höheren Sauerstoffpartialdruck auf der Sweepgasseite im Vergleich zur Feedgasseite führt. Der Transportprozess würde also zum Stillstand kommen oder sich bei höherem Sauerstoffpartialdruck auf der Sweepgasseite umkehren.

Eine Erzeugung von reinem, komprimiertem Sauerstoff erscheint mit den bekannten Anordnungen und Verfahren nur bei mechanischer Verdichtung des Feedgases oder des abgetrennten Sauerstoffs möglich, wie dies auch entsprechend dem Stand der Technik beschrieben wird.
Der Erfindung liegt die Aufgabe zugrunde, eine Möglichkeit anzugeben, den reinen Sauerstoff aus der Luft abzutrennen und diesen auf Drücke oberhalb des Umgebungsdrucks zu verdichten, wobei dafür auf mechanische oder elektromechanische Kompression von Luft oder Sauerstoff verzichtet werden soll.

Erfindungsgemäß wird die Aufgabenstellung durch das Verfahren nach Ansprüchen 1 und 2 beziehungsweise durch die Anordnung nach Ansprüche 3 bis 7 gelöst. Das Wasser wird in unterschiedlichen Aggregatzuständen in einem Kreislauf geführt und die apparativen Verhältnisse so gestaltet, dass der gewünschte hohe Sauerstoffdruck räumlich getrennt vom Membranmodul erzeugt und die Vermischung des erzeugten Sauerstoffs mit dem frisch erzeugten Wasserdampf vermieden wird.
Der erfindungsgemäße Membrantrennprozess zur Erzeugung von komprimiertem Sauerstoff unter Verwendung gemischt leitender Membranen und mit Dampf als Spülgas ist dadurch gekennzeichnet, dass Luft bei Umgebungsdruck eingesetzt wird und keine mechanische Kompression von Gasen erfolgt, dass hingegen eine thermische Kompression des Sauerstoffs auf Drücke über Umgebungsdruck stattfindet, indem das aus dem Membranmodul austretende Gasgemisch durch Rückstromperren geleitet und dadurch ein Rücktransport des gasförmigen Sauerstoffs in das Membranmodul und an die gemischt leitenden Membranen verhindert wird, dass flüssiges, heißes Wasser zur Trennung des gasförmigen Sauerstoffes vom Verdampferraum genutzt wird, dass das Wasser im Kreislauf geführt wird und der Sauerstoffdruck durch den Gegendruck am Sauerstoffauslass reguliert wird. Insbesondere wird der Dampfvolumenstrom auf das 0,1-fache bis 3-fache des Luftvolumenstroms eingestellt und die Rückströmung des Sauerstoffs in das Membranmodul durch eine Rückstromsperre verhindert, indem innerhalb der Rückstromsperre eine Strömungsgeschwindigkeit im Produktgasstrom von mehr als 0,2 m/s durch Querschnittsverengung oder vergleichbare Maßnahmen erreicht wird. Ein besonderer Vorteil besteht darin, dass aus dem unter Druck stehenden Produktgasgemisch elektrische Energie erzeugt werden kann, z. B. durch Entspannung des Gasgemisches aus Wasserdampf und Sauerstoff in Dampfturbinen oder Dampfmotoren.

Eine vorteilhafte Ausführung ergibt sich, wenn die Membrankomponente selbst als druckdichte Hülle genutzt wird, so dass ein separater Druckbehälter entfallen kann. Als mischleitende Membran wird ein Rohr aus dem Material BSCF (BSCF - Ba_{0,5}Sr_{0,5}C_{0,8}Fe_{0,2}O_{3-δ}) mit einer Länge von 500 mm, einem Außendurchmesser von 10 mm und einer Wandstärke von 1 mm eingesetzt, das auf einer Seite verschlossen ist.

Im Membranrohr wird ein dünneres Einleitungsrohr mit ca. 4 mm Außendurchmesser angeordnet, das den H₂O-Dampf an das innere geschlossene Ende des Membranrohres heranführt. Der offene Querschnitt des entstehenden Zwischenraums zwischen Membranrohr und konzentrisch eingebautem Einleitungsrohr ist durch die verwendeten Durchmesser so ausgelegt, dass entlang der Rohrachsen bereits im Zwischenraum der Rohre bei den unten aufgeführten Betriebsbedingungen eine Strömungsgeschwindigkeit des Gasgemisches von 0,45 m/s erreicht wird. Der gesamte Zwischenraum zwischen Einleitungsrohr und Membranrohr stellt somit eine integrierte Rückflusssperre für das Gasgemisch H₂O(g)/O₂ dar.

Membranrohr und Einleitungsrohr werden konzentrisch und gasdicht in einen metallischen Anschlussblock eingedichtet, z. B. mit üblichen Polymerdichtungen oder durch Lötung. Der Anschlussblock mit dem aufrecht stehenden Membranrohr wird in einen nicht druckdichten Ofen eingebracht, der mit Luft gespült werden kann. Der Übergangsbereich zwischen Metall und Ofen wird dabei in der Höhe so justiert bzw. durch eingebrachtes Isolationsmaterial variiert, dass dort die Siedetemperatur des Wassers im Anschlussblock überall überschritten, die Beständigkeit der verwendeten Dichtungen und Schlauchleitungen jedoch nicht gefährdet wird.

Als Verdampfer wird ein Zweihalskolben (0,5 I) verwendet, der mit 350 ml Wasser befüllt wird. Dem Verdampfer wird thermische Energie zugeführt, so dass das Wasser zu sieden beginnt und verdampft. Der Wasserdampf wird über eine möglichst kurze Schlauchleitung dem Anschlussblock zugeführt und über das Einleitungsrohr an die gemischt leitende Membran geführt. Der Sauerstoff aus der Ofenatmosphäre tritt bei ausreichend hoher Temperatur des Ofens und der Membran durch die Membranwandung in den Dampf ein, da der Sauerstoffpartialdruck im Wasserdampf wesentlich geringer als in der Ofenatmosphäre ist.

Das Gasgemisch H₂O(g)/O₂ wird vom Anschlussblock mit einem Schlauch zum unteren Ende eines aufrecht stehenden, mit Umgebungsluft gekühlten Kühlers geführt, der aus einem 50 cm langen, senkrecht oder schräg gestellten Kupferrohr mit aufgepressten Blechlamellen besteht. Am Kopf des Kühlers befindet sich ein mit Wasser gefüllter Blasenzähler, aus dem im Betrieb der Sauerstoff unter Überwindung des Umgebungsdrucks und des hydrostatischen Gegendrucks der Flüssigkeit im Blasenzähler austritt. Das untere Ende des Kühlers ist gleichzeitig mit einem Schlauchsiphon verbunden, der lediglich aus einer Schlauchschleife besteht. In dieser Schlauchschleife sammelt sich Kondensat und läuft anschließend über. Die Überlaufhöhe des Schlauchsiphons wird auf 0,5 bis 2 cm eingestellt, so dass sich nur eine geringe Menge flüssigen Wassers in der Schlauchschleife des Schlauchsiphons befindet, der hydrostatische Gegendruck durch das im Siphon befindliche Wasser gering ist und trotzdem eine Trennung der unterschiedlichen Gasphasen in Kühler und Verdampfer durch die Flüssigkeit im Siphon gewährleistet ist. Das am Siphon überlaufende Wasser wird in einen Zweihalskolben (0,25 I) eingeleitet, der als Kondensatsammler und Sicherheitsflasche dient. Aus dem Kondensatsammler wird überschüssiges flüssiges Wasser unterhalb des Flüssigkeitsspiegels entnommen und in den Verdampfer zurückgeführt. Das noch heiße Wasser verdampft dort erneut.

Zur Inbetriebnahme wird zunächst der Ofen mit dem daran befindlichen Anschlussblock und dem Membranrohr auf ca. 850 °C aufgeheizt. Anschließend wird dem Verdampfer Wärme zugeführt, bis das Wasser siedet und verdampft. Es wird anschließend stetig so viel Wärme zugeführt, dass ca. 12 g Wasser pro Stunde verdampfen, dies entspricht ca. 15 Normlitern Wasserdampf pro Stunde. Der das Membranrohr umgebende Ofenraum wird nach Erreichen der Betriebstemperatur mit ca. 30 NI Luft pro Stunde gespült. Am Blasenzähler oberhalb des Kühlers werden bei 400 mm beheizter Länge des BSCF-Membranrohres (ca. 300 mm Membranlänge bei 850 °C) und den genannten Durchsätzen etwa 2,5 NI Sauerstoff pro Stunde erzeugt.

Die Erfindung soll nachstehend anhand von Ausführungsbeispielen näher erläutert werden. Hierzu zeigen:
- Fig. 1: ein Verfahrensschema zur Erzeugung von komprimiertem Sauerstoff,
- Fig. 2: ein Verfahrensschema zur Erzeugung von komprimiertem Sauerstoff mit verbesserter Energieeffizienz,
- Fig. 3: ein Verfahrensschema zur kombinierten Erzeugung von Sauerstoff und Elektrizität und
- Fig. 4: ein Membranmodul mit Dampfspülung zur Erzeugung von Sauerstoff mit Überdruck.

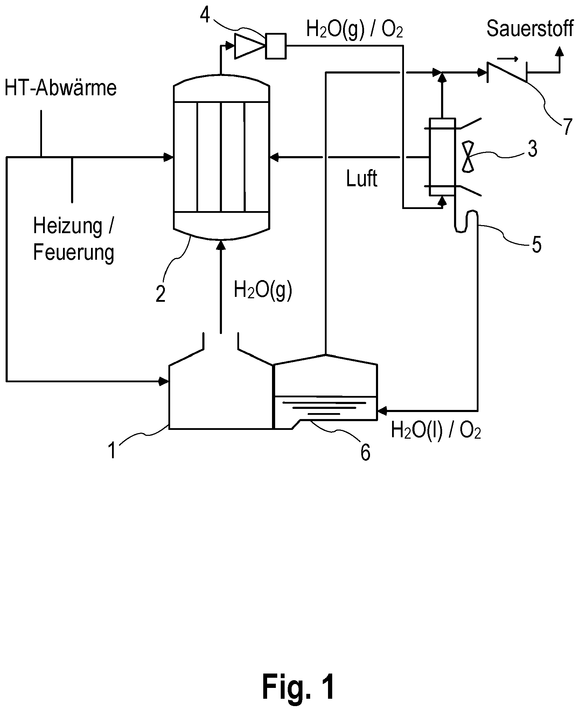

Anhand von Fig. 1 soll das erfindungsgemäße Verfahrensprinzip erläutert werden. Zunächst wird flüssiges Wasser in einem Verdampfer 1 verdampft und innerhalb eines Membranmoduls 2 an die mittels Abwärme oder anderweitig beheizte MIEC-Membran (Sweepgas-Seite) geführt. Der Sauerstoff permeiert aus dem unkomprimierten Feedgas Luft durch die Membran in den Wasserdampf, da dessen Sauerstoffpartialdruck (pₗ) zunächst deutlich geringer ist als der Sauerstoffpartialdruck (pₕ) auf der Luftseite, insbesondere nahe dem Dampfeintritt. Entlang der mit Dampf beströmten Membranoberfläche reichert sich der Dampf zunehmend mit Sauerstoff an, wobei der Druck nahezu gleich bleibt, aber eine Volumenausdehnung erfolgt. Das Gasgemisch aus Wasserdampf und Sauerstoff wird nach dem Membrankontakt einem Kühler 3 zugeführt, der Wasserdampf größtenteils wieder auskondensiert und das Wasser in flüssiger Form dem Verdampfer 1 erneut zugeführt.

Erfindungsgemäß wird die Einstellung eines Gleichgewichtes der Sauerstoffpartialdrücke verhindert, indem der Dampfvolumenstrom auf Werte vom 0,1-fachen bis zum 3-fachen des Luftvolumenstroms eingestellt wird. Dadurch wird stetig Sauerstoff aus dem Membranmodul 2 ausgetragen und neuer, nahezu sauerstofffreier Dampf ins Membranmodul 2 eingebracht. Gleichzeitig wird die Strömungsgeschwindigkeit des Dampf-Sauerstoff-Gemisches durch Verringerung der freien Strömungsquerschnitte so eingestellt, dass während und insbesondere nach dem Membrankontakt, zumindest aber innerhalb einer Rückstromsperre 4, eine Strömungsgeschwindigkeit von 0,2 m/s überschritten wird. Dadurch wird eine Rückströmung des erzeugten Sauerstoffs an die Membran, die entsprechende Absenkung der Triebkraft In(pₕ/pₗ) und die Einstellung des Gleichgewichts der Sauerstoffpartialdrücke vermieden.

Das Gasgemisch wird innerhalb des Kühlers 3 in flüssiges Wasser eingeleitet, dadurch abgekühlt und der Wasserdampf wird größtenteils als flüssiges Wasser abgeschieden, das nach unten läuft. Die Einleitung erfolgt dergestalt, dass der im Wasser gasförmig aufsteigende Sauerstoff in ein gesondertes Gasreservoir gelangt, also durch flüssiges Wasser im Kühler 3 vom einströmenden Gasgemisch aus Wasserdampf und Sauerstoff getrennt ist. Dies kann in einfacher Weise durch einen Siphon 5 und/oder mittels eines (nicht dargestellten) Tauchsiphons am Eintrittspunkt des Gasgemisches in den Kühler 3 realisiert werden. Das flüssige Wasser gelangt anschließend in einen Flüssigkeitsabscheider oder Kondensatsammler 6, in dem noch verbliebene feinverteilte Sauerstoffblasen durch Beruhigung der Flüssigkeit abgeschieden werden. Zur Verbesserung des Druckausgleichs in der Gasphase kann ausgehend vom Gasraum des Kondensatsammlers 6 eine Ausgleichsleitung zum Kopf des Kühlers 3 bzw. zur dort abgehenden Sauerstoffleitung geführt werden.

In der überstehenden Gasphase des Kühlers 3 sammelt sich reiner, jedoch feuchter Sauerstoff. Der Feuchtegehalt des Sauerstoffs kann vor dem Überdruckventil 7 durch Auskondensation bei definierter Temperatur eingestellt werden, wobei das Kondensat vorteilhaft in den Wasserkreislauf zurückgeführt wird. Der Systemdruck und der Sauerstoffdruck werden am Druckminderer bzw. am Überdruckventil 7 vorgegeben.

Das flüssige Wasser wird vom Kondensatsammler 6 in den Verdampfer 1 zurückgeleitet, wobei durch einen ausreichend hohen Füllstand des flüssigen Wassers in Kondensatsammler 6 und Verdampfer 1 ein Kontakt von Sauerstoff und frisch erzeugtem Wasserdampf in der Gasphase vermieden wird. Da Wasser nahe am Siedepunkt nur geringe Mengen gelöster Gase enthält, wird im Verdampfer 1 stets Wasserdampf mit nur geringem Sauerstoffanteil erzeugt, so dass der für die Sauerstoffpermeation erforderliche niedrige Sauerstoffpartialdruck (pₗ) wiederum an der MIEC-Membran anliegt.

Die Kompression des Sauerstoffs erfolgt somit primär durch den Druck des Wasserdampfes. Darüber hinaus kommt es zu einer selbsttätigen Kompression durch den über die Membran ins halboffene System eintretenden Sauerstoff. Dies geschieht sowohl bei Umgebungsdruck, also bei ca. 1 bar, als auch bei hohem Überdruck des Dampfes, da Rückstromsperre 4 und Flüssigphasensperre den abgetrennten gasförmigen Sauerstoff von der mischleitenden Membran separieren.

Bereits ohne Gegendruck am Gasausgang des Systems, also bei Umgebungsdruck des Dampfes, wird somit der Gesamtdruck im System erhöht. Im Gleichgewichtsfall kann dabei bereits im ersten Verdampfungs- und Kondensationszyklus ein Systemdruck von ca. 1,2 bar erreicht werden. Wird am Überdruckventil 7 gezielt ein Gegendruck eingestellt und dem Verdampfer 1 weiter mehr Wärmeenergie zugeführt, als am Kühler 3 abgeführt wird, so steigt wie bei einem gewöhnlichen Dampferzeuger der Druck im System allmählich bis zu diesem eingestellten Gegendruck an. Aufgrund des bezüglich des Wassers nahezu geschlossenen Kreislaufs überträgt sich dieser Druckanstieg auf den Sauerstoff. Damit sind der thermischen Verdichtung des Sauerstoffs keine prinzipiellen, sondern lediglich technische Grenzen gesetzt, wie sie auch für die technische Dampferzeugung gelten.

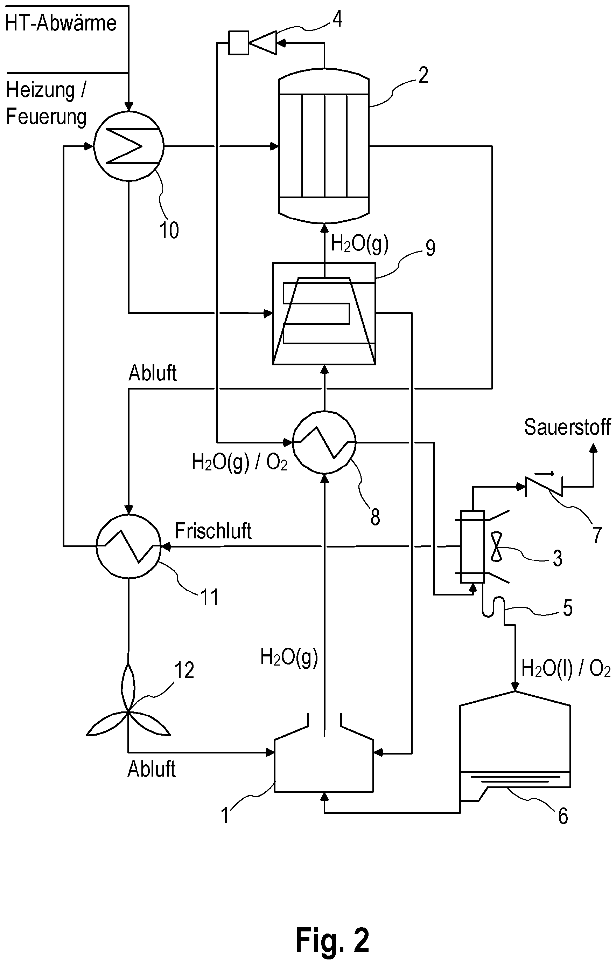

Zur Verbesserung der Energieeffizienz des Verfahrens werden die Medienströme vorteilhaft über verschiedene Wärmetauscher geführt, wie dies in Fig. 2 schematisch dargestellt ist. Da sich die Wärmekapazitäten von Luft und Wasserdampf erheblich unterscheiden, wird die in den entsprechenden Gasströmen enthaltene Wärme bevorzugt innerhalb der jeweiligen Gasströme zurückgewonnen. Dadurch können deren Volumenströme weitgehend unabhängig voneinander variiert werden, ohne die Wärmerückgewinnung stark zu beeinflussen. Dementsprechend wird die Frischluft zunächst zur Kondensation des Wasserdampfes am Kühler 3 genutzt und anschließend über den ersten Wärmetauscher 11 geführt, so dass die Frischluft weiter durch die heiße Abluft vorgewärmt wird. Die im Vergleich zum Ablauf gemäß Fig. 1 höheren Druckverluste werden durch ein Saugzuggebläse 12 auf der Abluftseite überwunden.

Mittels Hochtemperaturabwärme oder durch externe Zuheizung erfolgt vor dem Membranmodul 2 die Nacherhitzung im zweiten Wärmetauscher 10, wobei dieser auch in das Membranmodul 2 integriert werden kann. Da geringe Leckströme zwischen ein- und austretendem Luftstrom für die Prozessführung unkritisch sind, werden hier bevorzugt preiswerte regenerative Wärmetauscher mit hoher Wärmerückgewinnung eingesetzt. Nach dem zweiten Wärmetauscher 10 wird der Abwärmestrom zunächst zur Dampferhitzung im Überhitzer 9 und danach zur Verdampfung des Wassers im Verdampfer 1 eingesetzt. Dem Verdampfer 1 wird ferner gemäß Fig. 2 auch die Restwärme der vom Saugzuggebläse 12 kommenden Abluft zugeführt.

Das aus dem Membranmodul 2 austretende heiße Gasgemisch H₂O(g)/O₂ wird über die Rückstromsperre 4 geleitet und anschließend zur Erwärmung des eintretenden Dampfes im dritten Wärmetauscher 8 verwendet. Danach wird es zur Abscheidung des Wassers dem Kühler 3 zugeführt. Das Wasser wird im Kühler 3 weitgehend auskondensiert und über den Siphon 5 in den Kondensatsammler 6 eingeleitet. Wie in der Ausführung gemäß Fig. 1 werden der System- und damit auch der Sauerstoffdruck am Überdruckventil 7 eingestellt.

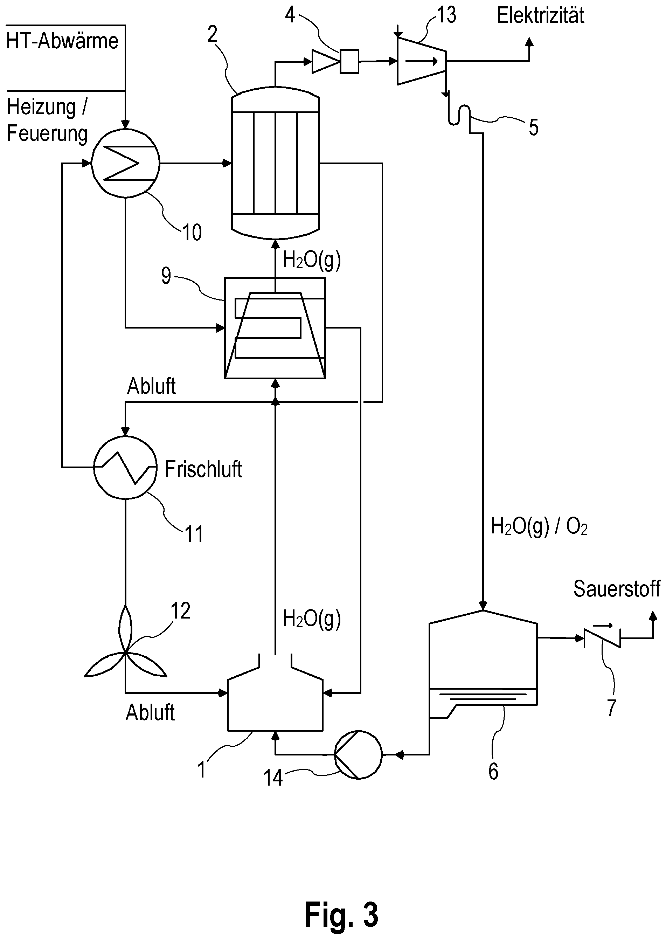

Die selbsttätige Kompression des Gasgemisches durch den Eintritt des Sauerstoffs in den Dampf kann neben der Erzeugung von komprimiertem Sauerstoff auch zur kombinierten Erzeugung von Elektrizität genutzt werden. Der in Fig. 3 dargestellte Prozess enthält dementsprechend anstelle des dritten Wärmetauschers 8 und des Kühlers 3 eine konventionelle Dampfturbine 13 zur Stromerzeugung.

Da ein Großteil des erzeugten Druckes des Gasgemisches H₂O(g)/O₂ über der Dampfturbine 13 abfällt, reicht der hydrostatische Druckunterschied zwischen Kondensatsammler 6 und Verdampfer 1 im Fall der energetischen Nutzung nicht mehr zur Befüllung des Verdampfers 1 aus. Deshalb wird zusätzlich eine Pumpe 14 eingesetzt, um flüssiges Wasser in den Verdampfer 1 einzubringen.

Gegenüber einer konventionellen Energieerzeugung über Dampferzeugung und Turbine bietet der erfindungsgemäße Prozess den Vorteil, dass neben der Stromerzeugung außerdem noch Sauerstoff mit Überdruck erzeugt wird. Darüber hinaus liegt der Systemdruck aufgrund der zusätzlichen Selbstverdichtung des Sauerstoffs typischerweise geringfügig über dem Druck, der beim konventionellen Dampfkraftwerk beim gleichen Temperaturniveau bzw. bei vergleichbarem Wärmeeintrag erreicht werden würde.

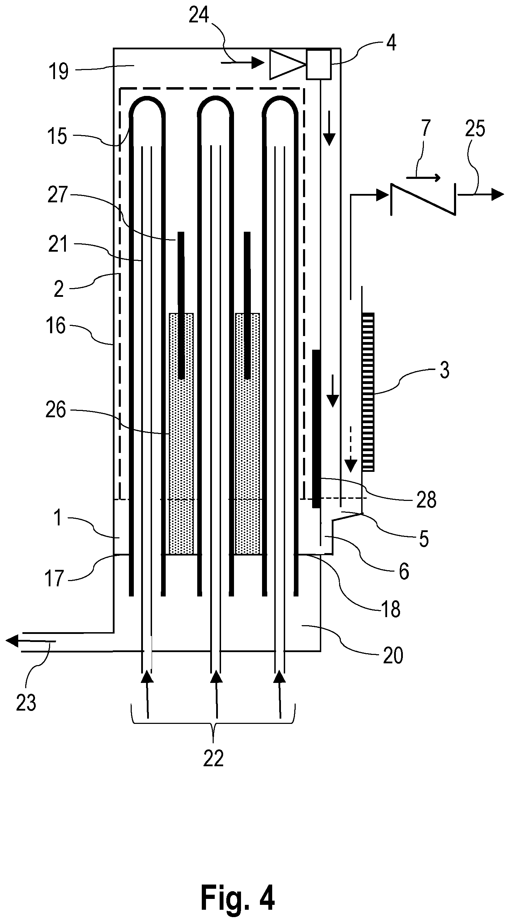

Gemäß Fig.4 ist ein Modul zur thermischen Erzeugung und Kompression von Sauerstoff in einem Druckbehälter 16 dargestellt, wobei 1 m³/h Sauerstoff mit 7 bar Überdruck erzeugt werden kann.

Der schematische Aufbau ist entsprechend Fig. 4 dargestellt. Es werden 400 Membranrohre 15 aus dem Material BSCF mit einer Länge von 500 mm, einem Außendurchmesser von 10 mm und einer Wandstärke von 1 mm in einem temperatur- und druckstabilen Druckbehälter 16 eingesetzt, der die Mehrzahl der verfahrenstechnischen Komponenten, wie Membranmodul 2, Verdampfer 1, Kondensatsammler 6, Siphon 5, Rückstromsperre 4, enthält. Der Druckbehälter 16 wird wiederum so in einen nicht dargestellten Verbrennungsraum oder einen Rauchgaskanal eingebracht oder mit diesem kontaktiert, dass im Druckbehälter 16 eine Temperatur von ca. 850 °C erreicht wird. Dafür kann auch anderweitig Abwärme in den Druckbehälter 16 eingekoppelt werden. Die im Druckbehälter 16 eingebauten Membranrohre 15 werden dadurch auf einer Länge von mindestens 20 cm auf eine Temperatur von etwa 850 °C erwärmt.

Die offenen Enden der Membranrohre 15 sind gasdicht in eine Bodenplatte 17 eingedichtet; die Dichtung 18 kann durch konventionelle Polymerdichtungen oder Lötung erfolgen. Bodenplatte 17 und Gehäuse werden so ausgelegt, dass die thermische Stabilität der Dichtung 18 nicht gefährdet wird und eine effektive Trennung zwischen dem Wasserdampfüberdruckbereich 19 und dem Abluftbereich 20 gewährleistet ist.

In die Membranrohre 15 werden temperaturbeständige Lufteinleitungsrohre 21 aus zunderbeständigem Stahl oder Keramik eingesetzt. Die Lufteinleitungsrohre 21 enden im heißen Bereich des Druckbehälters 16 jeweils etwa 2 cm vor dem inneren Ende des einseitig verschlossenen Membranrohres 15. Die Lufteinleitungsrohre 21 werden gasdicht durch den Abluftbereich 20 geführt. Durch die Lufteinleitungsrohre 21 wird Frischluft über die Lufteinleitungsöffnungen 22 bei Raumtemperatur in die Membranrohre 15 geleitet. Nach dem Austreten der Frischluft aus dem Lufteinleitungsrohr 21 am heißen Membranende ist die Frischluft bereits auf ca. 850 °C vorgewärmt.

Auf der Bodenplatte 17 im Druckbehälter 16 befindet sich eine etwa 2 cm hohe Wasservorlage, die einen in den Druckbehälter 16 integrierten Verdampfer 1 darstellt. Aus dem heißen Bereich des Druckbehälters 16 wird durch Wärmeleitung und Strahlung die Wasservorlage erhitzt und das Wasser verdampft. Der Wasserdampf gelangt in den heißen Modulbereich und fungiert als sauerstoffarmes Sweepgas.

Das Sauerstoffpartialdruckverhältnis zwischen der Membranrohrinnenseite (ca. 21 % O₂) und dem Wasserdampfüberdruckbereich 19 mit ca. 0 % O₂ sowie die hohen Temperaturen führen zu einer Permeation des Sauerstoffs durch die Membranwand in den Wasserdampf. Die sauerstoffabgereicherte Luft im Membranrohr 15 wird im Spalt zwischen dem Membranrohr 15 und dem Lufteinleitungsrohr 21 in den Abluftbereich 20 geleitet und verlässt den Druckbehälter 16 am Abluftaustritt 23. Der Wasserdampf wird mit dem permeierten Sauerstoff angereichert, es entsteht im Kopfteil des Druckbehälters 16 ein H₂O (g)/O₂-Gemisch 24. Dieses wird durch die Rückstromsperre 4 in den Außenbereich des Druckbehälters 16 und anschließend durch eine Tauchung (Siphon 5) innerhalb des Kondensatsammlers 6 geleitet. Die Rückstromsperre 4 besteht aus einer einfachen Verengung eines offenen Querschnitts im Gasraum, die für die nachfolgend angegebenen Durchsätze eine Strömungsgeschwindigkeit von minimal 0,3 m/s realisiert. Der Gasstrom aus Wasser und Sauerstoff gelangt nach der Tauchung in flüssigem, heißem Wasser an den luftgekühlten Kühler 3, wo Wasser zum überwiegenden Teil auskondensiert wird. Der Kondensatsammler 6 bildet mit der Wasservorlage bzw. dem Verdampfer 1 einen gemeinsamen Flüssigkeitsbehälter, wobei die Teilbehälter über einen weiteren Tauchsiphon innerhalb der Flüssigphase miteinander verbunden sind.

Überschüssiges flüssiges Wasser vom Kühler 3 fließt zurück in die Wasservorlage. Der gasförmige Sauerstoff kann nach dem Überdruckventil 7 an der Sauerstoffentnahmestelle 25 mit Überdruck entnommen werden.

Zur Erhöhung der Verdampfungsrate des Wassers kann ein kapillaraktiver Docht 26 eingesetzt werden, der durch kapillares Saugen Wasser aus der Wasservorlage in den heißen Bereich des Moduls transportiert. Die Wärmeübertragung aus dem heißen Bereich des Moduls auf das flüssige Wasser im Bereich der Verdampfungszone kann zusätzlich durch einen Wärmeübertrager 27 verbessert werden. Wird der Wärmeübertrager 27 z. B. als Heatpipe ausgeführt, können dadurch wesentlich höhere Verdampfungsraten und höhere Sauerstoffproduktionsraten erreicht werden.

Weitere Wärmeübertrager 28 können eingesetzt werden, um die Kondensationswärme aus dem heißen H₂O (g)/O₂-Gemisch 24 aus dem Dampf ins flüssige Wasser zu überführen. Dadurch kann ein Großteil der Kondensationswärme zurückgewonnen und für die Verdampfung des Wassers eingesetzt werden, was die Energieeffizienz des Trennverfahrens verbessert.

Die Inbetriebnahme erfolgt durch Einstellung des Überdruckventils 7 auf 7 bar, Verringerung der Luftkühlung am Kühler 3 durch Abdeckung mit Isolationsmaterial und Anheizen des Moduls. Der Druck des entstehenden Wasserdampfes steigt im Druckbehälter 16 bis zum eingestellten Überdruck von 7 bar, die Verdampfungstemperatur in der Wasservorlage bzw. im Verdampfer 1 auf ca. 170 °C. Nach Erreichen der Betriebstemperatur von 850 °C in der heißen Reaktorzone werden die weitere Wärmezufuhr und die Luftkühlung am Kühler 3 so eingestellt, dass ca. 35 Liter flüssiges Wasser je Stunde verdampfen, es werden dementsprechend ca. 45 Nm³ Wasserdampf pro Stunde im Kreislauf geführt. Weiterhin werden dem Membranreaktor ca. 45 Nm³ Frischluft je Stunde zugeführt.

Nach der Anfahrzeit beträgt der Absolutdruck im System ca. 8 bar. Über die Länge der Membranrohre 15 geht ca. 1 Nm³ Sauerstoff je Stunde von der Luft in den Wasserdampf über. Der Partialdruck des Sauerstoffs im Wasserdampf erreicht nach dem Membrankontakt ca. 180 mbar. Nach dem Überdruckventil ist 1 Nm³ Sauerstoff je Stunde mit 7 bar Überdruck verfügbar.

### Bezugszeichenliste

- 1: Verdampfer
- 2: Membranmodul
- 3: Kühler
- 4: Rückstromsperre
- 5: Siphon
- 6: Kondensatsammler
- 7: Überdruckventil
- 8: dritter Wärmetauscher
- 9: Überhitzer
- 10: zweiter Wärmetauscher
- 11: erster Wärmetauscher
- 12: Saugzuggebläse
- 13: Dampfturbine
- 14: Pumpe
- 15: Membranrohre
- 16: Druckbehälter
- 17: Bodenplatte
- 18: Dichtung
- 19: Wasserdampfüberdruckbereich
- 20: Abluftbereich
- 21: Lufteinleitungsrohr
- 22: Lufteinleitungsöffnungen
- 23: Abluftaustritt
- 24: H₂O (g)/O₂-Gemisch
- 25: Sauerstoffentnahmestelle
- 26: kapillaraktiver Docht
- 27: Wärmeübertrager
- 28: weitere Wärmeübertrager

## Patentansprüche

1. Verfahren zur Erzeugung von komprimiertem Sauerstoff unter Verwendung mindestens einer gemischt leitenden MIEC-Membran, wobei jede eine Sweepgasseite und eine Feedgasseite aufweist, **dadurch gekennzeichnet, dass**
(a) Wasser in einem Verdampfer (1) verdampft und an die mittels Abwärme und/oder anderweitig beheizte MIEC-Membran auf der Sweepgasseite geführt wird,
(b) unkomprimierte Luft an die Feedgasseite der MIEC-Membran geführt wird, so dass Sauerstoff aus der Luft durch die MIEC-Membran in den Wasserdampf permeiert und ein Gasgemisch aus Wasserdampf und Sauerstoff entsteht,
(c) das Gasgemisch aus Wasserdampf und Sauerstoff nach Durchlaufen einer Rückstromsperre (4) einem Kühler (3) zugeführt wird, so dass der Wasserdampf wieder größtenteils auskondensiert, wobei das Wasser dem Verdampfer (1) und der freiwerdende Sauerstoff über ein Überdruckventil (7) einem Gasreservoir zugeführt wird,
(d) die Strömungsgeschwindigkeit des Gasgemisches durch die Rückstromsperre (4) auf einen Wert größer als 0,2 m/s eingestellt wird
(e) die Einstellung eines Gleichgewichtes der Sauerstoffpartialdrücke verhindert wird, indem der Dampfvolumenstrom auf Werte vom 0,1-fachen bis zum 3-fachen des Luftvolumenstromes eingestellt wird.

2. Verfahren nach Anspruch 1, **dadurch gekennzeichnet, dass** aus dem unter Druck stehenden Gasgemisch elektrische Energie erzeugt wird

3. Anordnung zur Erzeugung von komprimiertem Sauerstoff unter Verwendung eines gemischt leitenden MIEC-Membranmoduls, welches sweepgasseitig einen Eingang und einen Ausgang und feedgasseitig einen Luftzufuhreingang und einen Luftausgang aufweist, **dadurch gekennzeichnet, dass** dem Eingang des MIEC-Membranmoduls ein Verdampfer (1) vorgeordnet ist und der Ausgang des MIEC-Membranmoduls über eine Rückstromsperre (4), einen Kühler (3) und einen Kondensatsammler (6) mit dem Verdampfer (1) in Verbindung steht.

4. Anordnung nach Anspruch 3, **dadurch gekennzeichnet, dass** der Kühler (3) einen Siphon (5) aufweist oder der Siphon (5) dem Kühler (3) nachgeordnet ist.

5. Anordnung nach Anspruch 3, **dadurch gekennzeichnet, dass** der Kühler (3) zusätzlich über einen ersten Wärmetauscher (11) und nachfolgend einen zweiten Wärmetauscher (10) mit dem Luftzufuhreingang des MIEC-Membranmoduls in Verbindung steht.

6. Anordnung nach Anspruch 3, **dadurch gekennzeichnet, dass** der Rückstromsperre (4) eine Dampfturbine (13) nachgeordnet ist.

7. Anordnung nach Anspruch 3, **dadurch gekennzeichnet, dass** zwischen dem Verdampfer (1) und dem Eingang ein dritter Wärmetauscher (8) und ein Überhitzer (9) angeordnet sind.

## Claims

1. Method for generating compressed oxygen using at least one mixed-conduction MIEC membrane, each having a sweep gas side and a feed gas side, **characterized in that**
(a) water is evaporated in an evaporator (1) and is passed to the MIEC membrane, heated by waste heat and/or otherwise, on the sweep gas side,
(b) uncompressed air is passed to the feed gas side of the MIEC membrane, so that oxygen from the air permeates through the MIEC membrane into the steam, and a gas mixture of steam and oxygen is formed,
(c) the gas mixture of steam and oxygen, after passing through a nonreturn valve (4), is supplied to a condenser (3), so that the steam very largely condenses out again, wherein the water is supplied to the evaporator (1) and the liberated oxygen is supplied to a gas reservoir via a pressure control valve (7),
(d) the flow rate of the gas mixture through the nonreturn valve (4) is set at a level of greater than 0.2 m/s,
(e) the establishment of an equilibrium of the oxygen partial pressures is prevented by setting the steam volume flow at levels from 0.1 up to 3 times the air volume flow.

2. Method according to claim 1, **characterized in that** electrical energy is generated from the gas mixture under pressure.

3. Arrangement for generating compressed oxygen using a mixed-conduction MIEC membrane module which on the sweep gas side has an inlet and an outlet and on the feed gas side has an air supply inlet and an air outlet, **characterized in that** an evaporator (1) is arranged upstream of the inlet of the MIEC membrane module, and the outlet of the MIEC membrane module communicates with the evaporator (1) via a nonreturn valve (4), a condenser (3), and a condensate collector (6).

4. Arrangement according to claim 3, **characterized in that** the condenser (3) has a siphon (5) or the siphon (5) is arranged downstream of the condenser (3).

5. Arrangement according to claim 3, **characterized in that** the condenser (3) additionally communicates with the air supply inlet of the MIEC membrane module via a first heat exchanger (11) and subsequently via a second heat exchanger (10).

6. Arrangement according to claim 3, **characterized in that** a steam turbine (13) is arranged downstream of the nonreturn valve (4).

7. Arrangement according to claim 3, **characterized in that** a third heat exchanger (8) and a superheater (9) are arranged between the evaporator (1) and the inlet.

## Revendications

1. Procédé de génération d'oxygène comprimé en utilisant au moins une membrane MIEC conductrice mixte, chacune ayant un côté de gaz de balayage et un côté de gaz d'alimentation, **caractérisé en ce que**
(a) de l'eau est évaporée dans un évaporateur (1) et est dirigée vers la membrane MIEC, chauffée par chaleur perdue et/ou autrement, sur le côté de gaz de balayage,
(b) de l'air non comprimé est dirigé vers le côté de gaz d'alimentation de la membrane MIEC, de telle façon que l'oxygène venant de l'air pénètre à travers la membrane MIEC dans le vapeur, et un mélange de gaz est formé à partir de vapeur et d'oxygène,
(c) après être passé par un clapet anti-retour (4), le mélange de gaz de vapeur et d'oxygène est alimenté à un condenseur (3), de telle façon que le vapeur se condense largement de nouveau, l'eau étant alimentée à l'évaporateur (1) et l'oxygène libéré étant alimenté à un réservoir de gaz via une soupape de surpression (7),
(d) la vitesse d'écoulement du mélange de gaz à travers le clapet anti-retour (4) est réglée sur un niveau supérieur à 0,2 m/s,
(e) l'établissement d'un équilibre des pressions partielles d'oxygène est évité en réglant le débit volumique de vapeur sur des niveaux à partir de 0,1 jusqu'à 3 fois le débit volumique d'air.

2. Procédé selon la revendication 1, **caractérisé en ce que** de l'énergie électrique est générée à partir du mélange de gaz sous pression.

3. Agencement de génération d'oxygène comprimé en utilisant un module de membrane MIEC conductrice mixte qui a une entrée et une sortie sur le côté de gaz de balayage et a une entrée d'alimentation d'air et une sortie d'air sur le côté de gaz d'alimentation, **caractérisé en ce qu'**un évaporateur (1) est disposé en amont de l'entrée du module de membrane MIEC, et la sortie du module de membrane MIEC est en contact avec l'évaporateur (1) via un clapet anti-retour (4), un condenseur (3), et un collecteur de condensé (6).

4. Agencement selon la revendication 3, **caractérisé en ce que** le condenseur (3) a un siphon (5) ou le siphon (5) est disposé en aval du condenseur (3).

5. Agencement selon la revendication 3, **caractérisé en ce que** le condenseur (3) est aussi en contact avec l'entrée d'alimentation d'air du module de membrane MIEC via un premier échangeur de chaleur (11) et puis via un deuxième échangeur de chaleur (10).

6. Agencement selon la revendication 3, **caractérisé en ce qu'**une turbine à vapeur (13) est disposée en aval du clapet anti-retour (4).

7. Agencement selon la revendication 3, **caractérisé en ce qu'**un troisième échangeur de chaleur (8) et un surchauffeur (9) sont disposés entre l'évaporateur (1) et l'entrée.
